(19) Europäisches Patentamt
European Patent Office
Office européen des brevets

(11) EP 1 051 910 A2

(12) **EUROPEAN PATENT APPLICATION**

(43) Date of publication:
**15.11.2000 Bulletin 2000/46**

(21) Application number: **00303664.7**

(22) Date of filing: **02.05.2000**

(51) Int. Cl.[7]: **A01N 35/04**, A01N 35/06, A01N 43/16, A01N 43/30, A01N 43/10, A01N 43/08

(84) Designated Contracting States:
**AT BE CH CY DE DK ES FI FR GB GR IE IT LI LU MC NL PT SE**
Designated Extension States:
**AL LT LV MK RO SI**

(30) Priority: **08.05.1999 GB 9910544**

(71) Applicant: **Sorex Limited**
**Widnes, Cheshire WA8 8TJ (GB)**

(72) Inventors:
- **Hodgkinson, Leslie Charles**
  **Runcorn, Cheshire WA7 1ES (GB)**
- **LeQuesne, Lesley Carol**
  **Widnes, Cheshire WA8 9AT (GB)**

(74) Representative:
**Wilkinson, Stephen John**
**Stevens, Hewlett & Perkins**
**1 St. Augustine's Place**
**Bristol BS1 4UD (GB)**

(54) **The treatment of pests using certain ethylenically-unsaturated carbonyl compounds**

(57) A pesticidal composition comprising an inert carrier and, as active ingredient, an αβ-unsaturated carbonyl compound selected from:

(i) compounds of the formula I

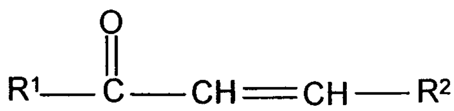

(I)

wherein $R^1$ is a phenyl group optionally substituted with 1 or 2 chlorine atoms, a naphthyl group or a furyl group optionally substituted by 1 or 2 methyl groups, $R^2$ is a group selected from phenyl, furyl, thienyl, furfuryl, thien-2-ylmethyl or a group of the formula

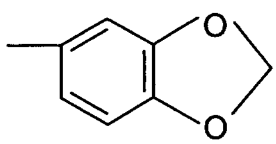

(vi) 2-cyclohexenone; and
(vii) 5-phenyl-3-formyl-pyran-4-one.

The composition has use particularly in the treatment of pests such as insects and acarids.
The invention also provides compounds of formula I above wherein

$R^1$ is 2-naphthyl and $R^2$ is furfuryl; or
$R^1$ is phenyl and $R^2$ is fur-3-yl; or
$R^2$ is fur-3-yl and $R^1$ is 2,5-dimethylfur-3-yl; or
$R^1$ is phenyl and $R^2$ is 3,4-methylenedioxyphenyl.

EP 1 051 910 A2

## Description

The present invention relates to the treatment of pests using certain ethylenically-unsaturated carbonyl compounds. More particularly, it relates to a method of treating pests, such as insects and acarids, using such αβ-unsaturated carbonyl compounds and to compositions containing such compounds, as active ingredients, for use in the method.

According to one aspect, the present invention provides the use of an αβ-unsaturated carbonyl compound as a pesticide wherein the αβ-unsaturated carbonyl compound is selected from:

(i) compounds of the formula I

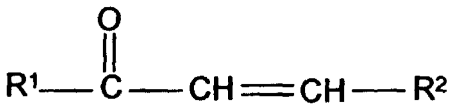 (I)

wherein $R^1$ is a phenyl group optionally substituted with 1 or 2 chlorine atoms, a naphthyl group or a furyl group optionally substituted by 1 or 2 methyl groups, $R^2$ is a group selected from phenyl, furyl, thienyl, furfuryl, thien-2-ylmethyl or a group of the formula

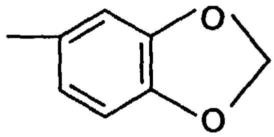

(ii) 2-cyclohexenone; and
(iii) 5-phenyl-3-formyl-pyran-4-one.

The present invention further provides a compound of the formula I

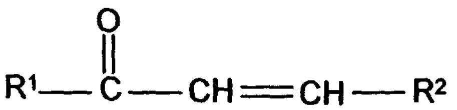 (I)

wherein

$R^1$ is 2-naphthyl and $R^2$ is furfuryl; or
$R^1$ is phenyl and $R^2$ is fur-3-yl; or
$R^1$ is fur-3-yl and $R^2$ is 2,5-dimethylfur-3-yl; or
$R^1$ is phenyl and $R^2$ is 3,4-methylenedioxyphenyl.

The present invention further provides a method of combating pests which comprises treating the pests with a pesticidally-effective amount of an αβ-unsaturated carbonyl compound of the type (i), (ii) or (iii) defined above. The present invention yet further provides a pesticidal composition which comprises a carrier and, as active ingredient, an αβ-unsaturated carbonyl compound of the type (i), (ii) or (iii) defined above.

The αβ-unsaturated carbonyl compounds of types (i), (ii) and (iii), as identified above, have been found to exhibit excellent activity against acarids, for instance ectoparasitic mites such as *Psoroptes cuniculi* (rabbit ear canker mite), *Psoroptes ovis* (sheep scab mite) and against insects, for example, *Musca domestica* (housefly).

Of the αβ-unsaturated carbonyl compounds disclosed above, particularly high activity against *Psoroptes cuniculi* is shown by the compounds of the formula I in which $R^1$ is phenyl or a 2,5-dimethylfur-3-yl group and $R^2$ is furyl, phenyl or a group having the structural formula

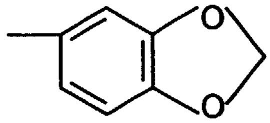

Especially preferred compounds are

1-benzoyl 2-(2-furyl)ethene;
benzylideneacetophenone;
3-(fur-3-yl) 1-(2,5-dimethyl fur-3-yl)propen-1-one; and
1-phenyl-3-(3,4-methylenedioxyphenyl)propen-1-one.

The αβ-unsaturated carbonyl compounds used in the present invention may be prepared by standard preparative methods known in the art. For instance, the compounds of the formula 1 above may be prepared by reacting an acetyl compound of the formula II.

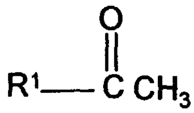

**(II)**

with an aldehyde of the formula III

$$R^1\text{—}CHO \qquad (III)$$

in the presence of an aqueous alkali metal hydroxide solution, preferably potassium hydroxide. The reactants will usually be added together in alcoholic solution, typically an ethanolic solution at room temperature.

The active compounds may be used in the treatment of pests with or without an appropriate carrier. We have found, for instance, that the ethenically-unsaturated carbonyl compounds when deposited on a surface show activity towards houseflies and mites which contact the surface provided with the deposit. A suitable deposit on a surface can be effected by treating the surface, to be contacted by the pests, with a solution of the chosen compound in an inert volatile solvent and then allowing the volatile solvent to evaporate to leave the deposit on the treated surface. An example of a suitable inert, volatile solvent is acetone. Thus, according to a further aspect, the present invention provides a method of combating pests, particularly houseflies, by causing the pests to contact a surface on which is provided a deposit of a pesticidally-effective αβ-unsaturated carbonyl compound selected from compounds defined in (i), (ii) and (iii) above. According to a preferred embodiment, the active compound is selected from benzylideneacetophenone and 1-phenyl-3-(3,4-methylenedioxyphenyl) propen-1-one since these have been found to possess superior activity by contact with houseflies.

When a carrier is used in the composition of the present invention it will be an appropriate inert material such as corn oil or, preferably, an aqueous liquid. Preferably, the active compounds will be used in an aqueous solution at a concentration of from 10 to 25 ppm. However the compound 3-(fur-3-yl) 1-(2,5-dimethyl fur-3-yl)propen-1-one is effective at lower concentrations down to 1 ppm. The composition may, alternatively be in the form of an emulsifiable concentrate in oil which, when mixed with water and a suitable emulsifier, forms an oil-in-water emulsion for use as a pesticide. A further alternative is to use a powder inert carrier, typically a wettable powder, if the composition is to be used in powder form. An example of such a wettable powder carrier is powdered clay. Such compositions may, if desired, additionally contain other components, as is usual in the art, such as surface active agents, emulsifiers, antioxidants or other stabilisers, perfumes and colouring agents. The amounts of such components, when used, will be those conventionally used in the art.

Preparation of Compounds

1. Preparation of (E)-1-(2,4-Dichlorophenvl)-3-(2-furyl)-2-propen-1-one (compound no. 4)

To a stirred solution of 2,4-di-chloro acetophenone (18.9g. 0.1 M) and 2-furaldehyde (8.28mls, 0.1 M) in ethanol (100mls) at room temperature was added 10% aqueous potassium hydroxide solution (100mls) in one portion. A modest exotherm occurred and the product crystallised from solution within a few minutes. After standing for 1 hour, the solid was filtered off, washed with 50% aqueous IMS and water. Recrystallisation from methanol containing a little acetonitrile furnished the title compound as pale yellow needles (19.13g, 72%) Mpt = 85-87°C, Rf - = 0.5 (1:4 EtOAc/hexane v/v). The NMR spectrum of this compound is shown in Figure 1. No evidence of any (Z) isomer was observed in the analysis carried out.

2. Preparation of (E)-3-(2-furyl)-1-(2-naphthyl)-2-propen-1-one (compound no. 10)

The procedure described at 1 above was repeated but using 2-acetylnaphthalene instead of 2,4-dichloroacetophenone. The title compound was obtained as pale yellow needles (17.86g, 72%), Mpt - = 80-82°C, Rf = 0.5 (1:4 EtOAc/hexane v/v). The NMR spectrum of the title compound is shown in Figure 2. Again no evidence of any (Z) isomer was observed in the analysis carried out.

3. Preparation of (E)-1-(2,5-Dimethyl-3-furyl)-3-(3-furyl)-2-propen-1-one (compound no. 5)

A stirred solution of 3-acetyl-2,5-dimethylfuran (2.76g. 0.02M) and 3-furaldehyde (1.92g. 0.02M) in ethanol (25mls) was treated with 10% aqueous potassium hydroxide solution (25mls) at room temperature. After 12 hours the mixture was diluted with water (100mls) and extracted with toluene (3 × 33mls). The combined extracts were dried ($Na_2SO_4$) and evaporated. Bulb to bulb distillation on a Kugelrohhr apparatus furnished some unreacted 3-acetyl-2,5-dimethylfuran, followed by the title compound as a pale yellow oil (2.87g, 66%). Bpt = 160°C at 20mm Hg, Rf - = 0.8 (1:2 EtOAc/hexane). The NMR spectrum of this compound is shown in Figure 3. This spectrum suggests the presence of a few percent of the (Z) isomer.

EXAMPLE 1

Determination of the efficacy of test compounds vs. *Psoroptes cuniculi*, the ear canker mite of rabbits, by laboratory assay

*P.cuniculi* mites were collected the day before the bioassay and were harvested from artificially infested New Zealand White rabbits. The scabs and mites were collected into a clean, clear glass or plastic sample tube approximately 6.0 × 2.5 cm (height × diameter), secured with a tight fitting screw-topped lid.
Mites were kept cool during transportation.
The mites were stored overnight in a refrigerator at 4°C and were revived at approximately 22°C (room temperature) for 1 hour before commencing experimentation.
A fresh 96-well, flat bottomed, polystyrene tissue culture plate (with lid) was used for the bioassay (well diameter 6.4mm).
Each test material/concentration tested was referred to as "test material ".
Two types of controls were tested, a positive control (usually the carrier of the test solution e.g., corn oil) and a negative control (usually water). Three wells, each containing 150µl of positive control and three wells, each containing 150µl of negative control were set-up using an Eppendorf microlite pipette. The same pipette tip was used for the three replicates of each control, but CLEAN tips had to be used for each different control.
Three replicate wells of 150µl of each test material to be bioassayed were set up. As with the controls, the same tip were used for each replicate, but a CLEAN tip was used for each different test material.
There were, therefore, three replicate wells of 150µl of each control and of each test material.
Adult female mites were used for the bioassay. They are the largest, darkest coloured mites, easily visible to the naked eye. Sex can be confirmed using a binocular zoom microscope (note the difference in leg length of the $4^{th}$ pair of legs - longer in the female; also note the difference in body size, the male is much smaller).
To avoid contamination of the mite collection tube with the test materials the following technique was used for each separate test material:

1. A small amount of scab and mites was transferred from the collection tube into the base of a 5.0cm diameter petri-dish.

2. The 5.0cm dish was placed into the base of a 9.0cm diameter petri-dish to give a moated "transfer dish".
3. Ten female mites were transferred to each of the replicate wells and the time was recorded.
4. The three replicate wells were checked under the binocular zoom microscope to ensure that they each had the correct number of live, active female mites.

The controls were set up first, followed by the lowest concentration test materials and ending with the highest for any test material. Once the wells were infested with mites the lid of the tissue culture plate was put in place to prevent any evaporation of liquid and escape of mites. All wells were then examined again under binocular zoom microscope and checked to ensure that they contained the correct number of mites.

The plates were then incubated at 22°C (room temperature) for 24 hours, with assessments carried out at the intervals of 1, 2, 3, 4, 5, 6 and 24 hours after the start of the test.

Mites were assessed and scored according to the following criteria, shown in Table 1:

Table 1

| Assessment criteria for mite bioassay | | |
|---|---|---|
| CRITERIA | STATUS | SCORE |
| Active movement of all limbs | LIVE | 1 .0 |
| Weak movement of three or more limbs | MORIBUND | 0.5 |
| No movement at all | DEAD | 0.0 |

Using this method, each replicate received a score of between 0.0 and 10.0 at each assessment. The mean score was determined for the three replicates of each control or test material after 24 hours. This mean score was then used to determine the mean percentage mortality (mean %M), as follows:

$$\text{Mean \% M} = 100 - \left[\frac{\text{Observed score}}{\text{Max. score possible}} \times 100\right]$$

Control mortality should be corrected for by using Abbott's Formula:

$$\text{Adjusted \% C} = \left[\frac{\text{\%treatment - \%control}}{\text{100- \%control}} \times 100\right]$$

The results are shown in Table 2.

The compounds tested were:

| | | |
|---|---|---|
| Compound no. | 1 | 1-benzoyl 2-(2-furyl)ethene |
| | 2 | 3-(2-chlorophenyl)-3-keto-1-furfurylpropene |
| | 3 | 3-(5-chlorophenyl)-3-keto-1-furfurylpropene |
| | 4 | 3-(2,4-dichlorophenyl)-3-keto-1-furfurylpropene |
| | 5 | 3-(2-naphthyl)-3-keto-1-furfuryl propene |
| | 6 | 3-phenyl-3-keto-1-(2-thienyl) propene |
| | 7 | 3-phenyl-3-keto-1-(3-furyl) propene |
| | 8 | 3-phenyl-3-keto-1-(3-thienyl) propene |
| | 9 | benzylideneacetophenone |
| | 10 | 3-(fur-3-yl) 1-(2,5-dimethylfur-3-yl)propen-1-one |
| | 11 | 1-phenyl-3-(3,4-methylenedioxyphenyl)propen-1-one |
| | 12 | 2-cyclohexenone |
| | 13 | 5-phenyl 3-formyl pyran-4-one |

The compounds supplied for testing were obtained from Key Organics, Highfield Industrial Estate, Camelford, Cornwall and were used as solutions in water with an emulsifier, TRITON X100 ("TX100").

Table 2

| Screen of compounds vs. Ear Canker Mite (ECM) | | | | | |
|---|---|---|---|---|---|
| Compound | 0.1 mg/ml in water +TX100, % Mortality (100ppm) | 0.025 mg/ml in water +TX100, % Mortality (25ppm) | 0.01 mg/ml in water +TX100, % Mortality (10ppm) | 0.005 mg/ml in water +TX100, % Mortality (5ppm) | 0.001 mg/ml in water +TX100, % Mortality (1ppm) |
| 1 | | 100%, < 1 hr | 50%, 24 hrs | 10%, 24 hrs | 0%, 24 hrs |
| 2 | | 100%, < 1 hr | 40%, 24hrs | | |
| 3 | | 100%, 24 hrs | 80%, 24 hrs | | |
| 4 | | 100%, 24 hrs | 60%, 24 hrs | | |
| 5 | | 100%, 24 hrs | 60%, 24 hrs | | |
| 6 | | 100%, < 1 hr | 30%, 24hrs | | |
| Compound | 0.1 mg/ml in water +TX100, % Mortality (100ppm) | 0.025 mg/ml in water +TX100, % Mortality (25ppm) | 0.01 mg/ml in water +TX100, % Mortality (10ppm) | 0.005 mg/ml in water +TX100, % Mortality (5ppm) | 0.001 mg/ml in water +TX100, % Mortality (1ppm) |
| 7 | | 100%, 24 hrs | 30%, 24 hrs | | |
| 8 | | 100% < 1 hr | 0%, 24 hrs | | |
| 9 | | 100%, < 1 hr | 60%, 24 hrs | 30%, 24 hrs | 0%, 24 hrs |
| 10 | | | 100%, < 1 hr | 70%, 24 hrs | 20%, 24 hrs |
| 11 | | | 100%, 24 hrs | 40%, 24 hrs | 0%, 24 hrs |
| 12 | 100%, 24 hrs | 60%, 24 hrs | | | |
| 13 | 100%, 24 hrs | 70%, 24 hrs | | | |

By comparison a commercial standard called "Bayticol" was included in the screen. "Bayticol" is a sheep dip containing the active ingredient flumethrin. Flumethrin technical material (TM) was bioassayed as a corn oil solution since it is insoluble in water. The results obtained from this test with the TM were 60% M at 4 mg $ml^{-1}$ (4000 ppm) a high concentration. The recommended use rate, however, when diluted as a dip is 44 ppm (0.044 mg $ml^{-1}$). During tests, it was discovered that a blank ECL (emulsifiable concentrate for livestock) formulation effected 100% M of ECM. This activity was traced to the benzoic acid in the formulation. The 0.044 mg $ml^{-1}$ (44 ppm) use rate was used as the commercial standard rate for comparison of the activity of novel compounds towards the Ear Canker Mite of rabbits.

Compound 1 was found to show high activity against ECM. At 0.025 mg $ml^{-1}$ it gave 100% M in less than 1 hour. At 0.01 mg $ml^{-1}$, 0.005 mg $ml^{-1}$ and 0.001 mg $ml^{-1}$, compound 1 gave 50% M, 10% M and 0% M, respectively in 24 hours.

Compound 9 achieved 60% M at 0.01 mg $ml^{-1}$ in 24 hours and 30% M at 0.005 mg $ml^{-1}$ in 24 hours, slightly better than compound 1.

Compound 10 achieved rapid mortality (100% in less than 1 hour) at 0.01 mg $ml^{-1}$. At 0.005 mg $ml^{-1}$ compound 10 achieved 70% M in 24 hours and 20% M in 24 hours at 0.001 mg $ml^{-1}$.

Compound 11 also showed significant activity against ECM. At 0.01 mg $ml^{-1}$ it achieved a mortality of 100% M in 24 hours and at 0.005 mg $ml^{-1}$ it achieved a mortality of 40% in 24 hours.

EXAMPLE 2

Determination of the efficacy of test compounds vs. Housefly (*Musca domestica*)

The housefly tests, knock-down (KD) was defined as the "inability of the fly to walk forwards in a co-ordinated way, with uncontrolled twitching or falling over and unable to right itself".

A continuous exposure deposit bioassay was carried out using, as the test compounds, the compounds 9, 10 and 11 as identified in Example 1 above.

Procedure

A glass jar was coated internally with an acetone solution of the compound to be tested. The deposit was applied evenly by rolling the jar on a roller until all the acetone had flashed off and the internal surface of the jar was dry. The internal deposit of the compound was 100 mg active ingredient per square metre (a.i.$m^2$). For each compound tested, three replicate jars, each containing ten female houseflies, were set-up. The flies were left in the jars for the duration of the experiment (24 hours) i.e., continuous exposure. Control jars (acetone only) were also set-up, each with ten female houseflies.

The flies were observed for KD and M every 15 minutes for the first hour and then after 1, 2, 3, 4 and 24 hours.

Results

Compound 9 and 11 achieved 40% M by 24 hours whereas compound 10 showed no contact activity vs. housefly at all.

EXAMPLE 3

Activity of compounds of the invention vs. *Psoroptes ovis* (sheep scab mite)

The activities of compounds 9 (15 ppm and 5 ppm), 10 (10 ppm), and 11 (10 ppm) were investigated according to the following trials.

| | | | |
|---|---|---|---|
| 1. | Number of Samples | Test Samples<br>Positive Control (Diazinon)<br>Negative Control (Water) | Ten (10)<br>One (1)<br>One (1) |
| 2. | Number of Replicates | Three (3) | |
| 3. | Number of Mites Per Well | Between eight (8) and twelve (12) adult females | |
| 4. | Nature of Test Compounds | Aqueous solutions. | |
| 5. | Amount of Test Solution | 3ml per sample | |
| 6. | Timing of Assessments | One hour<br>Three hours<br>Twenty four hours | (+1h)<br>(+3h) if required<br>(+24h) if required |

Two controls were set up, blank formulation and water.

Identical simultaneous screens were also run using the ear canker mite (*Psoroptes cuniculi*). A commercial standard for comparison purposes was DIAZINON (60% EC), tested at 10, 50, 75, 100 and 500 ppm for *P. ovis*.

Results

All results for *P. ovis* and *P. cuniculi* are shown together in Table 3 below. For comparison, the commercial standard Diazinon is normally made up at 400 ppm in the dip bath with a minimum maintenance level in the bath of 100-150 ppm.

Diazinon effected 100% M at 500 ppm, 76.1 % M at 100 ppm, 91.4% M at 75 ppm, 59.7% M at 50 ppm and only 37.5% M at 10 ppm.

Compound 10 was only active against *P. cuniculi*. Compound 11 gave only low activity vs. both species of mites at the levels tested.

Compounds 9, 12 and 13 however, were active against both species of mite - giving similar results with both

species. This compound, at 15 ppm, gave 100% M with both *P. cuniculi* and *P. ovis*. Since the experimental work was carried out, these two species have been reported as being the same species of mite (Sheep Scab Conference, Cardiff, 1998).

Table 3

| Comparative activity of novel compounds vs. *P.ovis* and *P. cuniculi* | | | | | |
|---|---|---|---|---|---|
| COMPOUND | PPM | SPECIES | MEAN % MORTALITY | | |
| | | | 3 hours | 6 hours | 24 hours |
| 9 | 15 | *P.ovis* | 2.8 | 12.6 | 100.0 |
| 9 | 15 | *P.cuniculi* | 100.0 | 100.0 | 100.0 |
| 9 | 5 | *P.ovis* | 19.2 | - | 23.0 |
| 9 | 5 | *P.cuniculi* | 0.0 | - | 50.0 |
| | | | | | |
| 10 | 10 | *P.ovis* | 0.0 | 0.0 | 37.0 |
| 10 | 10 | *P.cuniculi* | 100.0 | 100.0 | 100.0 |
| | | | | | |
| 11 | 10 | *P.ovis* | 0.0 | 0.0 | 37.0 |
| 11 | 10 | *P.cuniculi* | 0.0 | 0.0 | 0.0 |
| | | | | | |
| 12 | 35 | *P.ovis* | 11.1 | 33.3 | 100.0 |
| 12 | 35 | *P.cuniculi* | 0.0 | 0.0 | 96.0 |
| | | | | | |
| 13 | 30 | *P.ovis* | 10.0 | 60.0 | 100.0 |
| 13 | 30 | *P.cuniculi* | 0.0 | 0.0 | 93.0 |
| | | | | | |
| BLANK | - | *P.ovis* | 0.0 | 0.0 | 10.4 |
| | - | *P.cuniculi* | 0.0 | 0.0 | 0.0 |
| WATER | - | *P.ovis* | 0.0 | 0.0 | 3.3 |
| | - | *P.cuniculi* | 0.0 | 0.0 | 0.0 |
| | | | | | |
| DIAZINON | 10 | *P.ovis* | 0.0 | 2.8 | 37.5 |
| DIAZINON | 50 | *P.ovis* | 0.0 | 2.8 | 59.7 |
| DIAZINON | 75 | *P.ovis* | 0.0 | 3.0 | 91.4 |
| DIAZINON | 100 | *P.ovis* | 0.0 | 0.0 | 76.1 |
| DIAZINON | 500 | *P.ovis* | 20.0 | 42.2 | 100.0 |

## Claims

**1.** The use of an αβ-unsaturated carbonyl compound as a pesticide wherein the αβ-unsaturated carbonyl compound is selected from:

(i) compounds of the formula I

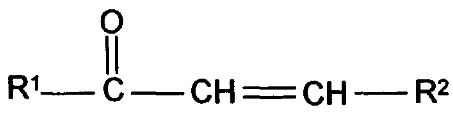 (I)

wherein $R^1$ is a phenyl group optionally substituted with 1 or 2 chlorine atoms, a naphthyl group or a furyl group optionally substituted by 1 or 2 methyl groups, $R^2$ is a group selected from phenyl, furyl, thienyl, furfuryl, thien-2-ylmethyl or a group of the formula

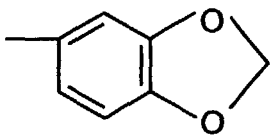

(ii) 2-cyclohexenone; and
(iii) 5-phenyl-3-formyl-pyran-4-one.

**2.** Use according to claim 1 wherein, in formula I $R^1$ is a phenyl or 2,5-dimethylfur-3-yl group and $R^2$ is furyl, phenyl or a group having the structural formula

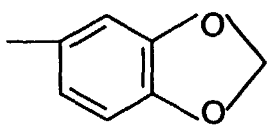

**3.** The use according to claim 2 wherein the αβ-unsaturated carbonyl compound is selected from

1-benzoyl 2-(2-furyl)ethene;
benzylideneacetophenone;
3-(fur-3-yl) 1-(2,5-dimethyl fur-3-yl)propen-1-one; and
1-phenyl-3-(3,4-methylenedioxyphenyl)propen-1-one.

**4.** A method of combating pests which comprises treating the pests with a pesticidally-effective amount of an αβ-unsaturated carbonyl compound selected from

(i) compounds of the formula I

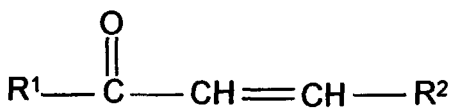 (I)

wherein $R^1$ is a phenyl group optionally substituted with 1 or 2 chlorine atoms, a naphthyl group or a furyl group optionally substituted by 1 or 2 methyl groups, $R^2$ is a group selected from phenyl, furyl, thienyl, furfuryl, thien-2-ylmethyl or a group of the formula

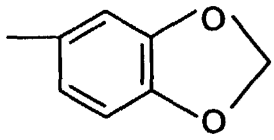

(iv) 2-cyclohexenone; and
(v) 5-phenyl-3-formyl-pyran-4-one.

**5.** A method according to claim 4, wherein the pests are selected from acarids and insects.

**6.** A method according to claim 5, wherein the pests are selected from Psoroptes cuniculi, Psoroptes ovis and Musca domestica.

**7.** A method according to claim 6, wherein the pest is Musca domestica and wherein the pest is caused to contact a surface on which is provided a deposit of the αβ-unsaturated carbonyl compound.

**8.** A pesticidal composition comprising an inert carrier and, as active ingredient, an αβ-unsaturated carbonyl compound selected from:

(i) compounds of the formula I

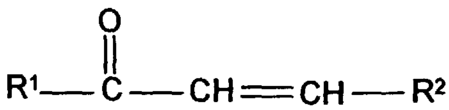 (I)

wherein $R^1$ is a phenyl group optionally substituted with 1 or 2 chlorine atoms, a naphthyl group or a furyl group optionally substituted by 1 or 2 methyl groups, $R^2$ is a group selected from phenyl, furyl, thienyl, furfuryl, thien-2-ylmethyl or a group of the formula

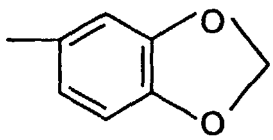

(vi) 2-cyclohexenone; and
(vii) 5-phenyl-3-formyl-pyran-4-one.

**9.** A composition according to claim 8, wherein formula I, $R^1$ is a phenyl or 2,5-dimethylfur-3-yl group and $R^2$ is furyl, phenyl or a group having the structural formula

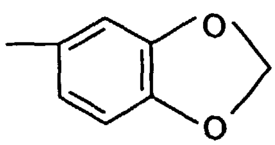

**10.** A composition according to claim 8, wherein in the αβ-unsaturated carbonyl compound is selected from

1-benzoyl 2-(2-furyl)ethene;
benzylideneacetophenone;
3-(fur-3-yl) 1-(2,5-dimethyl fur-3-yl)propen-1-one; and
1-phenyl-3-(3,4-methylenedioxyphenyl) propen-1-one.

**11.** A compound of the formula I

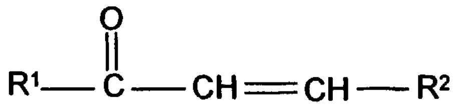

(I)

wherein

$R^1$ is 2-naphthyl and $R^2$ is furfuryl; or
$R^1$ is phenyl and $R^2$ is fur-3-yl; or
$R^1$ is fur-3-yl and $R^2$ is 2,5-dimethylfur-3-yl; or
$R^1$ is phenyl and $R^2$ is 3,4-methylenedioxyphenyl.

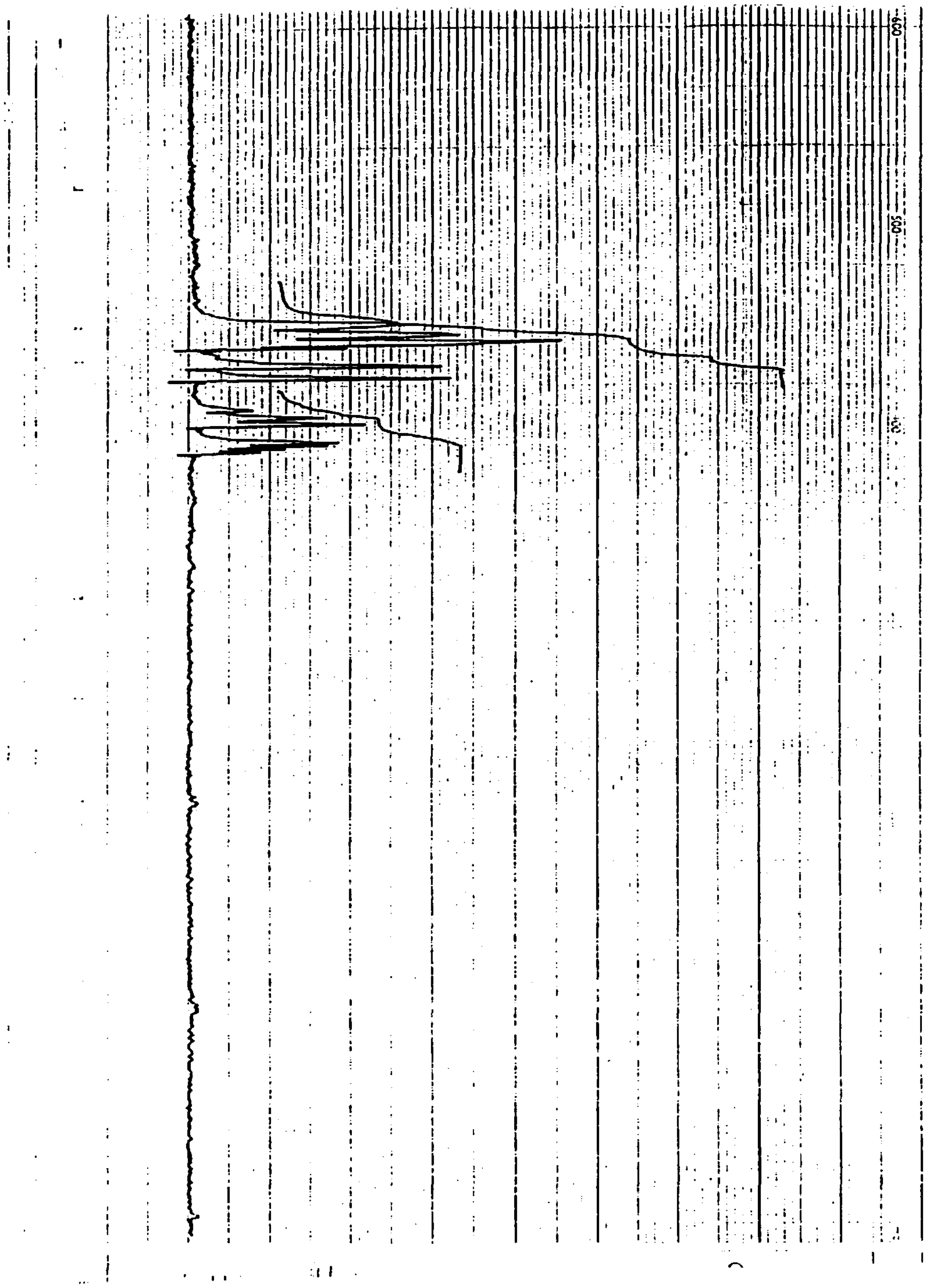

FIGURE 1

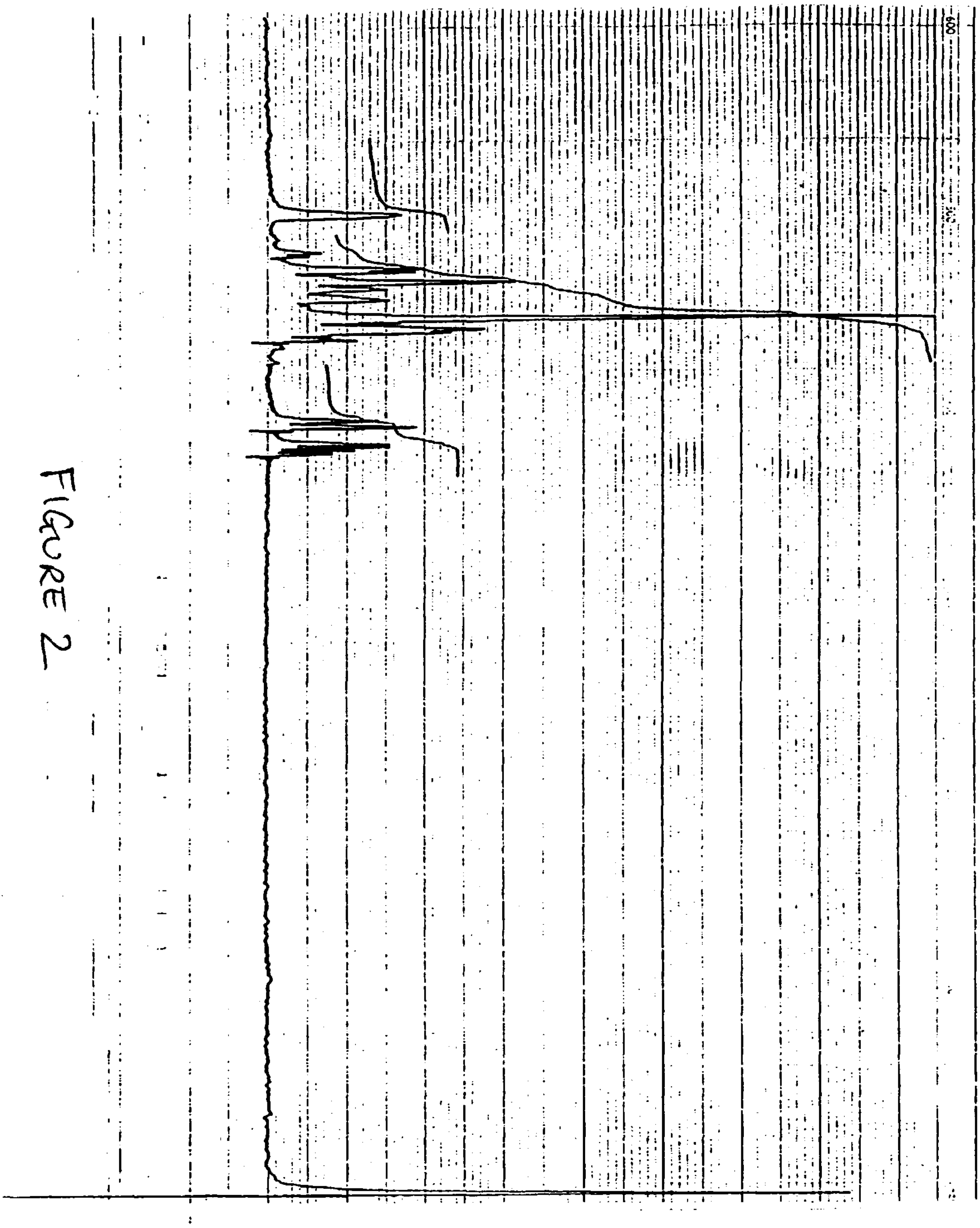

FIGURE 2

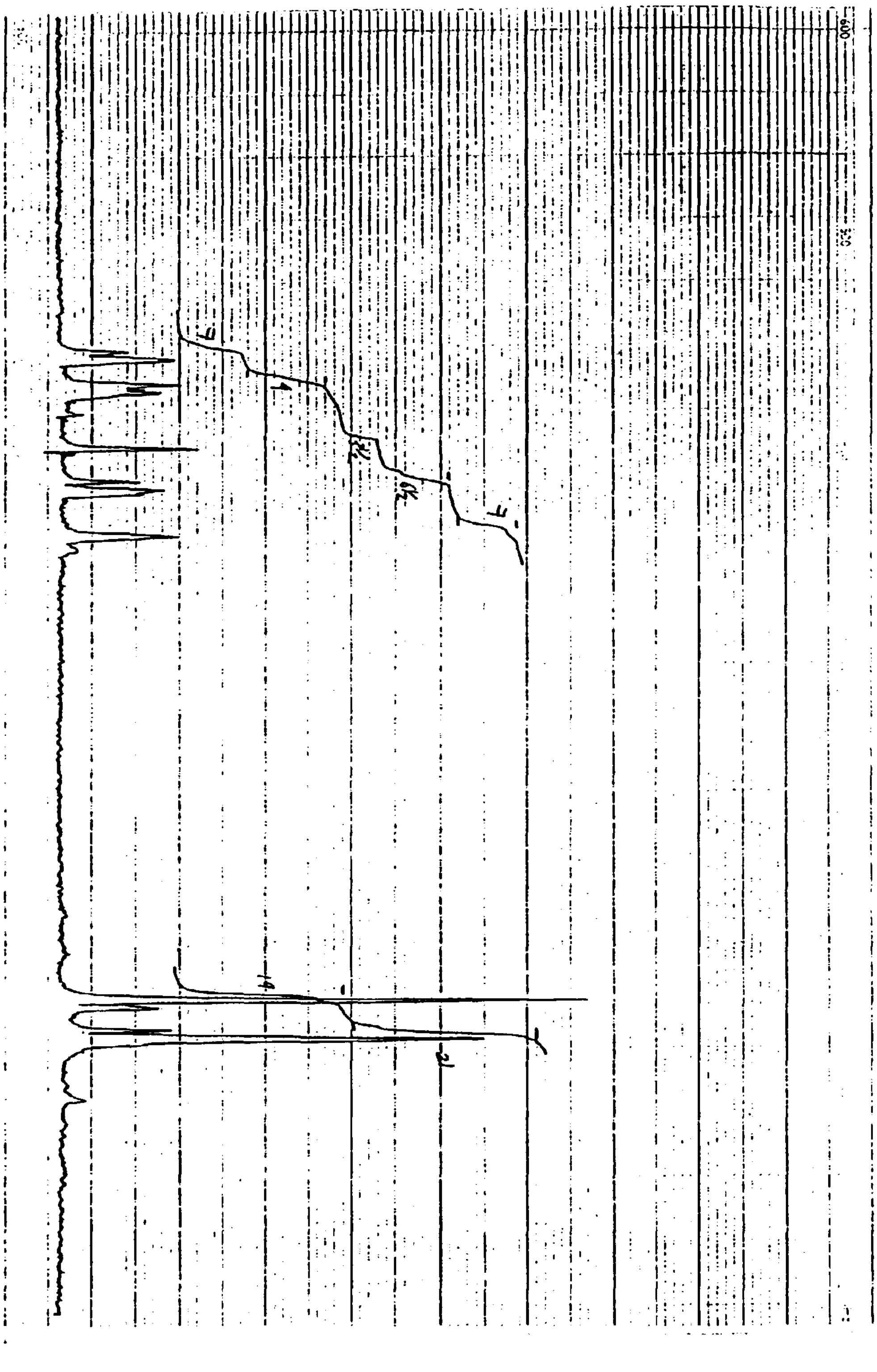

FIGURE 3